# EUROPEAN PATENT SPECIFICATION

(11) **EP 4 536 469 B1**
(45) Date of publication and mention of the grant of the patent: **27.05.2026**
(21) Application number: 23733463.6
(22) Date of filing: 09.06.2023
(51) Int. Cl.: B29C 64/118, B29C 64/245, B29C 64/379, B29C 64/236, B33Y 10/00, B33Y 30/00, B33Y 40/00

(54) **APPARATUS AND METHOD FOR SUPPORTING AN ARTICLE IN THE COURSE OF MANUFACTURE BY AN ADDITIVE MANUFACTURING PROCESS**
VORRICHTUNG UND VERFAHREN ZUM STÜTZEN EINES GEGENSTANDES WÄHREND DER HERSTELLUNG DURCH EIN ADDITIVES VERFAHREN
APPAREIL ET PROCÉDÉ POUR ASSURER LE SUPPORT D'UN ARTICLE AU COURS DE SA FABRICATION PAR UN PROCESSUS DE FABRICATION ADDITIVE

(30) Priority: 09.06.2022 IT 202200012239
(43) Date of publication of application: 16.04.2025
(73) Proprietor: Caracol S.r.l., 22074 Lomazzo (CO) (IT)
(72) Inventor: VANERIO, Daniele, 22074 LOMAZZO (CO) (IT); CASSIS, Paolo, 22074 LOMAZZO (CO) (IT); AVALLONE, Giovanni, 22074 LOMAZZO (CO) (IT)
(74) Representative: Studio Torta S.p.A.
(86) International application number: PCT/IB2023/055959
(87) International publication number: WO 2023/238089

(56) References cited:
- US-A1- 2016 144 563
- US-A1- 2018 345 585

## Description

### Technical Field

This invention concerns an apparatus and a method for supporting an article being manufactured using an additive manufacturing process or three-dimensional printing of polymers, technopolymers, and composite materials.

Additive manufacturing is used to produce products and semi-finished products, including big ones that need to be light and have complex shapes such as, for example, bodies and frames in the nautical, aeronautics, and automotive sector, machinery components, and architectural structures.

### State of the Art

Printing involves manufacturing articles through an additive manufacturing process, starting from a file of a digital three-dimensional model, produced using a CAD modelling system.

This invention relates, in particular, to three-dimensional printing with Fused Deposition Modelling (FDM) or Fused Granulate Fabrication (FGF), which is based on the use of a printing head provided with a plasticizing cylinder and an extrusion nozzle, from which a molten polymer material comes out. The polymer material coming out of the extrusion nozzle is deposited in layers on a work surface, according to a predefined three-dimensional model. Once deposited by the printing head, the layer of polymer material immediately solidifies and is bound to a layer of underlying material. The succession of overlapping layers forms, in this way, a single solid structure or final article of the desired shape.

The extrusion nozzle with a circular cross-section determines the formation of porosity in the cross-section of the products and the reduction of the contact surface between successive layers. The porosity entails a reduction in the mechanical properties of the components made with this technology.

To avoid this drawback, the applicant has devised nozzles with a polygonal cross-section, in particular a rectangular one, and wherein the printing head can be selectively directed so as to arrange the layers to increase the adhesion surface between the layers, reducing the intervening spaces as shown in the patent application IT102018000010225 belonging to the applicant.

A printing head generally comprises heating elements connected to the plasticizing cylinder to heat the plasticizing cylinder, an extrusion screw for advancing and melting the polymer material in the plasticizing cylinder and expelling the molten polymer material through the extrusion nozzle.

Generally, the polymer material is fed to the printing head in the granular state or in flakes or in the form of pellets, using a feeding device that comprises at least one hopper and a duct that connects the hopper to the printing head.

In many additive production processes and, in particular, in the case of the FGF (Fused Granulate Fabrication) process, it is necessary to replace the extrusion nozzle to change its dimensions and/or shape of the nozzle's opening. The shape and dimensions of the outlet have an essential role both in the polymer plasticizing process and in the features of the final component.

In the additive manufacturing processes and, in particular, in the case of FDM (Fused Deposition Modelling) processes, anchoring and removing the component from the printing surface are extremely important aspects.

In the case of producing large components, anchoring the piece is made more difficult by the thermal deformations induced by the process itself that tend to detach the piece from the printing surface, especially in the case of pieces with a lot of mass and with one of the horizontal dimensions greater than the vertical dimension.

The patent application WO 2022/096939 A1 belonging to the applicant describes a method for anchoring an article obtained using three-dimensional printing to a work surface. The method described in this patent application comprises the steps of providing a panel having an upper surface, a lower surface, and multiple through holes; depositing a layer of anchorage material in the fluid or semi-fluid state on the upper surface of the panel using an extrusion nozzle; leaving said fluid or semi-fluid anchorage material to flow through the through holes of the panel and solidify, at least partially, so as to be anchored to the panel.

The method described in WO 2022/096939 A1 anchors the article well, but the de-anchoring of the article is difficult to automate.

The patents US 9,908,287 B2 and US 10,245,781 B2 relate, respectively, to an apparatus and a method for anchoring an object during manufacturing with an additive manufacturing process.

In this case, the piece-holder table is defined by a succession of undercut protrusions and hollows that are, at least in part, engaged by the extruded plasticized material, which, solidifying, anchors the first layer to the piece-holder table.

The de-anchoring of the article involves running the article laterally along the undercut hollows.

In this case, a plunger device is needed to push the article on a service conveyor. The friction between the protrusions and the article is not, in any case, negligible and the forces exchanged are, in any case, significant.

Alternatively, the piece-holder table may be produced as a conveyor belt whose belt has undercut protrusions and hollows. In this case, de-anchoring the article involves bending the protrusions at a curved section of the conveyor belt. This method requires applying significant forces in the interface between each protrusion and the article so that the belt could be subject to sliding and wear.

An additional solution involves producing the piece-holder table in the form of a conveyor belt with circular sector protrusions that can be selectively rotated and disengaged.

In this case, the forces exchanged between the belt and the article are negligible, but the piece-holder table is complex and costly to produce.

Document US 2018/0345585 A1 discloses various platform design including planar, reel to reel, and conveyor belt platforms. All solutions disclosed in this document fail to provide a simple solution to manage the great force involved in displacing and detaching heavy and large products.

### Subject of the Invention

The purpose of this invention is to produce an apparatus to support an article being manufactured using additive manufacturing that is free of the drawbacks of the prior art.

In accordance with this invention, a support apparatus for supporting an article being manufactured by additive manufacturing is provided, the apparatus comprising a chain conveyor, which is configured to advance said article in a predetermined direction and comprises an upper branch; and a plurality of elongated elements, each of which is articulated directly to two adjacent elongated elements at both the opposite ends so as to define two drive chains at opposite ends of the elongated elements and a slot between each pair of adjacent elongated elements.

The drive chains enable the exertion of a relatively great force able to move and de-anchor big, heavy articles from the chain conveyor and, at the same time, to avoid sliding while the slots enable the molten polymer material to be anchored to the elongated elements.

In particular, each elongated element comprises a central profile having at least one wing and a core, wherein the wings of the adjacent elongated elements along the upper branch of the chain conveyor define a surface interrupted by a plurality of slots; and two chain links arranged at opposite ends of the profile and integral with the profile.

The chain links integral with the profile grant great rigidity and solidity to the chain conveyor while the T shape of the profile enables easy anchoring.

Each chain link comprises a first and a second axis of rotation parallel to each other for directly articulating the respective elongated element to the two chain links of respective adjacent elongated elements.

In this way, each elongated element can singly rotate directly in relation to the adjacent elongated elements.

In particular, the drive chains are Galle or Half-link ones so they can be coupled with drive components that are easily found on the market.

In particular, the chain conveyor comprises two drive sprockets engaged with said respective drive chains.

In this way, you avoid any type of sliding and it is possible to apply great forces to de-anchor the article from the chain conveyor.

Again, with the purpose of exerting great forces in the article-chain conveyor interface, the chain conveyor comprises an actuator connected to a reduction gear, which is connected to said drive sprockets. In particular, the reduction ratio of the reduction gear is greater than 100 so as to exert very strong drive torque.

In particular, the chain conveyor comprises two guides for guiding, respectively, the two drive chains. Each guide is arranged above the upper branch of the drive chain to prevent the upwards movement of the drive chain determined by the dimensional shrinkage of the thermoplastic material during solidification.

In particular, the apparatus comprises at least one heating element for heating the upper branch of the chain conveyor so as to facilitate de-anchoring the article from the elongated elements.

An additional purpose of this invention is to produce articles via an additive manufacturing process that enables the articles to be easily transported.

In accordance with this invention, an additive manufacturing system is provided comprising:
- a support apparatus as described above;
- an additive manufacturing machine comprising:
   - a plasticizing cylinder and an extrusion nozzle connected to the plasticizing cylinder for depositing layers of thermoplastic material on the chain conveyor and making an article using an additive manufacturing process; and
   - a robot to support and control the position of the plasticizing cylinder and extrusion nozzle in the space above said support apparatus.

In this way, the support apparatus, as well as enabling easy anchoring and de-anchoring of the article and transferring the completed article, makes it possible to move the article being manufactured so as to assist the robot and optimise the article manufacturing times.

Another purpose of this invention is to provide a method for supporting an article being manufactured via additive manufacturing that is free of the drawbacks of the prior art.

In accordance with this invention, a method for supporting an article being manufactured by additive manufacturing is provided, the method comprising:
- arranging a support apparatus as basically described above; and
- forming a layer of extruded polymeric material on elongated elements of the upper branch of the chain conveyor; and allowing part of the layer in a pasty state to fit into the slots between the adjacent elongated elements to form appendages so as to anchor said layer to the chain conveyor.

In particular, the method involves transferring the article to an additional conveyor adjacent to the chain conveyor by advancing the upper branch of the chain conveyor and the article in a given direction; and
- placing said article at a curved portion of said chain conveyor so as to move the base of the article away from the elongated elements of the chain conveyor.

Moving the base away causes the extraction of the appendages or their breakage.

In particular, the method involves heating the upper branch of the chain conveyor so as to facilitate the extraction of the appendages.

### Description of the Figures

Additional features and advantages of this invention will be clear from the description that follows of its nonlimiting embodiments, with reference to the attached figures, in which:
- Figure 1 is a schematic side elevation view, with parts removed for clarity, of an additive manufacturing system produced in accordance with this invention;
- Figure 2 is a perspective view, with parts removed for clarity, of an apparatus for supporting an article being manufactured by means of an additive manufacturing process in accordance with this invention;
- Figure 3 is a perspective view, with parts removed for clarity and on an enlarged scale, of a component of the apparatus in Figure 2;
- Figures 4 and 5 are views, respectively, in side elevation and plan view, with parts removed for clarity, of a detail of the apparatus in Figure 2; and
- Figures 6 and 7 are side elevation views, with details removed for clarity and on an enlarged scale, that represent respective methods for de-anchoring the article from the support apparatus.

### Preferred Embodiment of the Invention

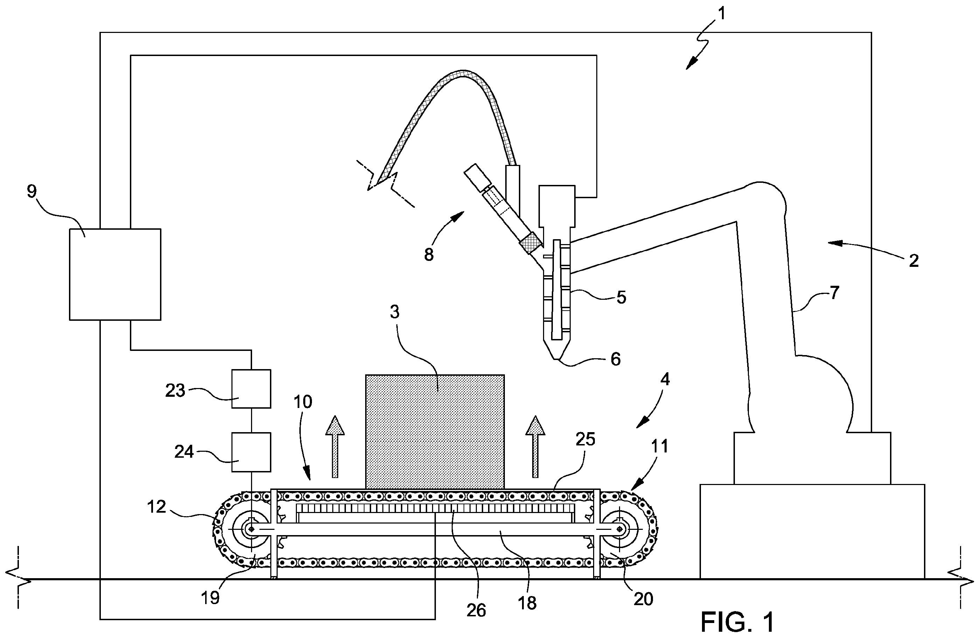

Figure 1 indicates, with reference number 1, an additive manufacturing system, which comprises an additive manufacturing machine 2 for producing articles 3; and a support apparatus 4 for supporting the articles 3 during manufacturing using the additive manufacturing process.

The additive manufacturing machine 2 comprises a plasticizing cylinder 5 provided with an extrusion nozzle 6 for depositing layers of material on the support apparatus 4 via the additive manufacturing process; and a robot 7, in particular an anthropomorphic robot, for supporting the plasticizing cylinder 5 and controlling the position and orientation of the extrusion nozzle 6.

The additive manufacturing machine 2 comprises a feeding device 8 for feeding thermoplastic material to the plasticizing cylinder 5.

The system 1 comprises a control unit 9 configured to control the additive manufacturing machine 2 and the support apparatus 4 and for receiving instructions via digital three-dimensional model files, created by means of a CAD modelling system.

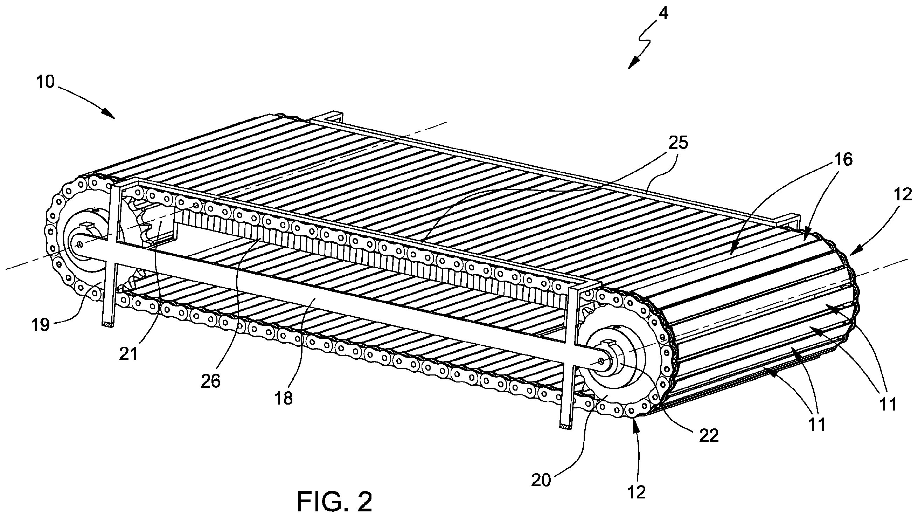

With reference to Figure 2, the support apparatus 4 comprises a chain conveyor 10, which comprises multiple elongated elements 11, each of which is directly articulated to the adjacent elongated elements 11 at both the opposite ends so as to define two drive chains 12 at the opposite ends of the elongated elements 11.

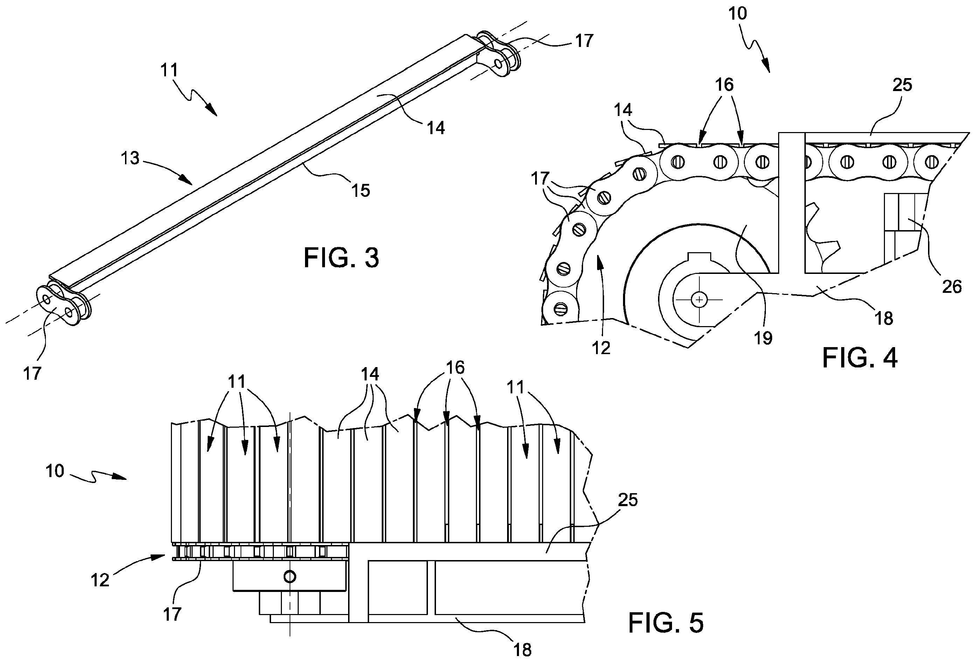

With reference to Figure 3, the elongated element 11 comprises a central profile 13 having at least one wing 14 and a core 15, wherein the wings 14 of the adjacent elongated elements 11 along the upper branch of the chain conveyor define the upper face of the chain conveyor and on which the article 3 rests and multiple slots 16 between the adjacent elongated elements 11 (Figures 4 and 5); and two chain links 17 arranged at the opposite ends of the profile 13 and integral with the profile 13. In practice, the profile 13 has a T-shaped cross-section.

Each chain link 17 has a first and a second axis of rotation parallel to each other for directly articulating the elongated element 11 to the two chain links of respective adjacent elongated elements 11 (Fig. 4).

Said drive chains 12 are Galle or Half-link ones.

The elongated element 11 is made of metal, in particular steel or aluminium.

With reference to Figure 2, the chain conveyor 10 comprises a frame 18, which supports two drive sprockets 19 engaged with said respective drive chains 12 and two return gears 20 engaged with the respective drive chains 12. The drive sprockets 19 are mounted on a common shaft 21 like the return gears 20 that are mounted on the same shaft 22.

With reference to Figure 1, the chain conveyor 10 comprises an actuator 23, in this case an electric motor, connected to a reduction gear 24 that is connected to the drive sprockets 19. The reduction gear reduction ratio is greater than 100 so as to determine a very low speed and, at the same time, a lot of torque.

The chain conveyor 10 comprises two guides 25 for guiding, respectively, the two drive chains 12. Each guide 25 is arranged above the drive chain 12 along the upper branch of the drive chain 12 to prevent the forces indicated with the vertical arrows and determined by the shrinkage of the thermoplastic material from deforming the upper branch.

The chain conveyor 10 comprises heating elements 26 for heating the upper branch of the chain conveyor 10.

The control unit 9 configured to synchronise the operations and movements of the additive manufacturing machine 2, of the chain conveyor 10 and of the heating element as a function of the digital three-dimensional model files, created using a CAD modelling system and procedures for moving the finished product.

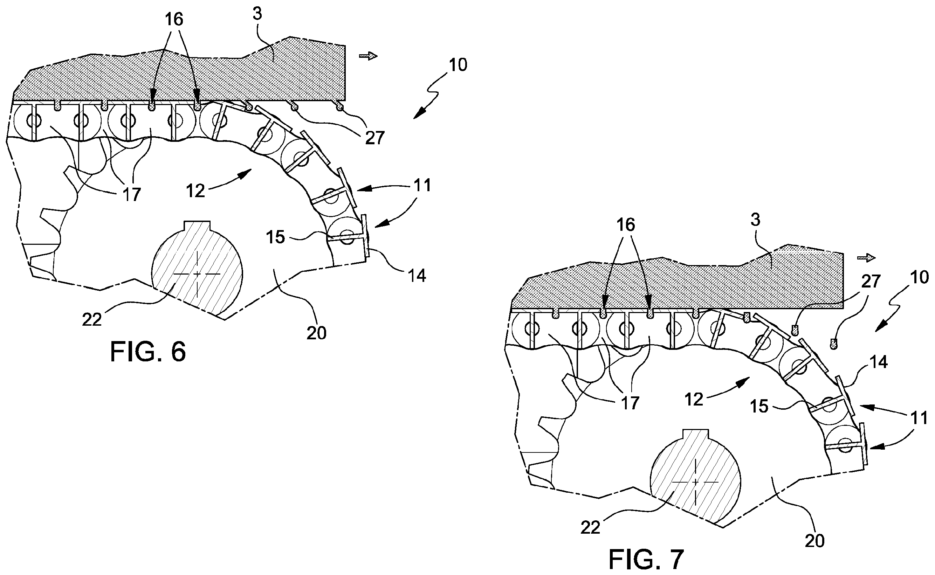

In use, the additive manufacturing machine 2 extrudes a layer of molten thermoplastic material on the upper branch of the chain conveyor 10. The thermoplastic material penetrates in part between the slots 16 to form appendages 27, which, once solidified, anchor the article 3 to the elongated elements 11 of the chain conveyor 10 according to what is better shown in Figure 6.

When the first layer solidifies, the thermoplastic material has a dimensional shrinkage that could deform the configuration and orientation of the elongated elements 11.

As a function of the complexity and shape of the article to be produced, the chain conveyor 10 with its movements coordinated by the control unit 9 can arrange the article 3 being manufactured in different positions so as to facilitate and simplify the movements of the extrusion nozzle 6.

When the article 3 is completed, by depositing successive layers of thermoplastic material, the chain conveyor is driven to transfer the article 3 to another conveyor that is not illustrated in the attached figures.

With reference to Figure 6, the article 3 is arranged at a curved portion of the chain conveyor 10, in this case at the return gears 20. The forward movement of the article 3 at the curved portion determines the extraction of the appendages 27 through the slots 16 as illustrated in Figure 6 or the breaking of the appendages 27 as illustrated in Figure 7. The different behaviours of the appendages 27 depends on the degree of stiffness of the appendages 27 that depends on the type of material and temperature of the same.

To this end, during the transfer of the article 3, the appendages 27 may be heated so as to make the thermoplastic material more malleable and facilitate the de-anchoring of the article 3.

Finally, it is clear that, this invention comprises additional variants of the embodiments described and included within the scope of protection of the attached claims.

## Claims

1. A support apparatus for supporting an article being manufactured by additive manufacturing, the apparatus (4) comprising a chain conveyor (10), which is configured to advance said article (3) in a predetermined direction and comprises an upper branch; and a plurality of elongated members (11), each of which is articulated directly to two adjacent elongated members (11) so as to define two drive chains (12) at opposite ends of the elongated members (11) and a slot (16) between each pair of adjacent elongated members (11).

2. The support apparatus as claimed in Claim 1, wherein each elongated element (11) comprises a central profile (13) having at least one wing (14) and a core (15), wherein the wings (14) of the adjacent elongated elements (11) along the upper branch of the chain conveyor (10) define a surface interrupted by a plurality of slots (16); and two chain links (17) arranged at opposite ends of the profile (13) and integral with the profile (13).

3. The support apparatus as claimed in claim 2, wherein each chain link (17) comprises a first and a second axis of rotation parallel to each other for directly articulating the respective elongated member (11) to the two chain links (17) of respective adjacent elongated members (11).

4. The support apparatus as claimed in claim 2 or 3, wherein said drive chains (12) are of the Galle or Half-link type.

5. The support apparatus as claimed in any one of the preceding claims, wherein the chain conveyor (10) comprises two drive sprockets (19) engaged with said drive chains (12).

6. The apparatus as claimed in claim 5, wherein the chain conveyor (10) comprises an actuator (23) connected to a reduction gear (24), which is connected to said drive sprocket (19), in particular said reduction gear (24) reduction ratio being greater than 100.

7. The apparatus as claimed in any one of the preceding claims, wherein the chain conveyor (10) comprises two guides (25) for guiding the two drive chains (12) respectively, each guide (25) being arranged above the drive chain (12) along the upper branch of the drive chain (12) to prevent upward displacement of the drive chain (12).

8. The apparatus as claimed in any one of the preceding claims, and comprising at least one heating element (26) for heating the upper branch of the chain conveyor (10)

9. An additive manufacturing system for making articles by an additive manufacturing process, the system (1) comprising:
- a support apparatus (4) as claimed in any one of the preceding claims;
- an additive manufacturing machine (2) comprising:
- a plasticizing cylinder (5) and an extrusion nozzle (6) connected to the plasticizing cylinder (5) for depositing layers of thermoplastic material on the chain conveyor and making an article (3) by an additive manufacturing process; and
- a robot (7) to support and control the position of the plasticizing cylinder and extrusion nozzle in the space above said support apparatus (4).

10. A method for supporting an article being manufactured by additive manufacturing, the method comprising:
- arranging a support apparatus (4) as claimed in any one of claims 1 to 8; and
- forming a layer of extruded polymeric material on elongated elements (11) of the upper branch of the chain conveyor (10); and allowing part of the layer in a pasty state to fit into the slots (16) between the adjacent elongated elements (11) to form appendages (27) so as to anchor said layer to the chain conveyor (10).

11. The method as claimed in claim 10 and comprising:
- transferring said article (3) to a further conveyor adjacent to said chain conveyor (10) by advancing said upper branch of said chain conveyor (10) and said article (3) in a given direction; and
- placing said article (3) at a curved portion of said chain conveyor (10) so as to move the base of said article (3) away from the elongated elements of said chain conveyor (10).

12. The method as claimed in claim 11 and comprising extracting said appendages (27) at said curved portion of said chain conveyor (10).

13. The method as claimed in any one of claims 11 to 12 and comprising heating the upper branch of the chain conveyor (10).

14. The method as claimed in any one of claims 10 to 13 and comprising controlling the advancement of the chain conveyor (10) as a function of the position of the article (3), the position of an additive manufacturing machine (2) and the printing coordinates.

## Patentansprüche

1. Stützvorrichtung zum Stützen eines durch additive Fertigung hergestellten Artikels, wobei die Vorrichtung (4) einen Kettenförderer (10) umfasst, der ausgelegt ist, um den Artikel (3) in eine vorbestimmte Richtung vorzuschieben, und der ein oberes Trum umfasst, und eine Vielzahl von langgestreckten Elementen (11), die jeweils direkt an zwei benachbarten langgestreckten Elementen (11) angelenkt sind, um zwei Antriebsketten (12) an entgegengesetzten Enden der langgestreckten Elemente (11) und einen Schlitz (16) zwischen jedem Paar benachbarter langgestreckter Elemente (11) zu definieren.

2. Stützvorrichtung nach Anspruch 1, wobei jedes langgestreckte Element (11) ein zentrales Profil (13), aufweisend mindestens einen Flügel (14) und einen Kern (15), umfasst, wobei die Flügel (14) der benachbarten langgestreckten Elemente (11) entlang des oberen Trums des Kettenförderers (10) eine durch eine Vielzahl von Schlitzen (16) unterbrochene Oberfläche definieren und zwei Kettenglieder (17) an entgegengesetzten Enden des Profils (13) angeordnet und einstückig mit dem Profil (13) ausgebildet sind.

3. Stützvorrichtung nach Anspruch 2, wobei jedes Kettenglied (17) eine erste und eine zweite Rotationsachse aufweist, die parallel zueinander verlaufen, um das jeweilige langgestreckte Element (11) direkt an den beiden Kettengliedern (17) der jeweiligen benachbarten langgestreckten Elemente (11) anzulenken.

4. Stützvorrichtung nach Anspruch 2 oder 3, wobei die Antriebsketten (12) vom Gall- oder Half-Link-Typ sind.

5. Stützvorrichtung nach einem der vorhergehenden Ansprüche, wobei der Kettenförderer (10) zwei Antriebskettenräder (19) aufweist, die mit den Antriebsketten (12) in Eingriff stehen.

6. Vorrichtung nach Anspruch 5, wobei der Kettenförderer (10) einen Aktuator (23) umfasst, der mit einem Untersetzungsgetriebe (24) verbunden ist, das mit dem Antriebskettenrad (19) verbunden ist, wobei das Untersetzungsverhältnis des Untersetzungsgetriebes (24) insbesondere größer als 100 ist.

7. Vorrichtung nach einem der vorhergehenden Ansprüche, wobei der Kettenförderer (10) zwei Führungen (25) jeweils zum Führen der beiden Antriebsketten (12) umfasst, wobei jede Führung (25) oberhalb der Antriebskette (12) entlang des oberen Trums der Antriebskette (12) angeordnet ist, um die Verschiebung der Antriebskette (12) nach oben zu vermeiden.

8. Vorrichtung nach einem der vorhergehenden Ansprüche, umfassend mindestens ein Heizelement (26) zum Heizen des oberen Trums des Kettenförderers (10).

9. Additives Fertigungssystem zur Herstellung von Artikeln durch einen additiven Fertigungsprozess, wobei das System (1) Folgendes umfasst:
- eine Stützvorrichtung (4) nach einem der vorhergehenden Ansprüche;
- eine Maschine zur additiven Fertigung (2), die Folgendes umfasst:
- einen Plastifizierzylinder (5) und eine Extrusionsdüse (6), die mit dem Plastifizierzylinder (5) verbunden ist, um Schichten aus thermoplastischem Material auf dem Kettenförderer abzulegen und einen Artikel (3) durch einen additiven Fertigungsprozess herzustellen, und
- einen Roboter (7) zum Stützen und Steuern der Position des Plastifizierzylinders und der Extrusionsdüse in dem Raum oberhalb der Stützvorrichtung (4).

10. Verfahren zum Stützen eines durch additive Fertigung hergestellten Artikels, wobei das Verfahren Folgendes umfasst:
- Anordnen einer Stützvorrichtung (4) nach einem der Ansprüche 1 bis 8 und
- Bilden einer Schicht aus extrudiertem Polymermaterial auf langgestreckten Elementen (11) des oberen Trums des Kettenförderers (10) sowie Ermöglichen, dass ein Teil der Schicht in einem pastösen Zustand in die Schlitze (16) zwischen den benachbarten langgestreckten Elementen (11) passt, um Fortsätze (27) zu bilden, um die Schicht an dem Kettenförderer (10) zu verankern.

11. Verfahren nach Anspruch 10, umfassend:
- Übergeben des Artikels (3) an einen weiteren Förderer, der an den Kettenförderer (10) angrenzt, indem das obere Trum des Kettenförderers (10) und der Artikel (3) in eine vorgegebene Richtung vorgeschoben werden, und
- Platzieren des Artikels (3) an einem gekrümmten Abschnitt des Kettenförderers (10), um die Basis des Artikels (3) wegführend von den langgestreckten Elementen des Kettenförderers (10) zu bewegen.

12. Verfahren nach Anspruch 11, umfassend das Extrahieren der Fortsätze (27) an dem gekrümmten Abschnitt des Kettenförderers (10).

13. Verfahren nach einem der Ansprüche 11 bis 12, umfassend das Erhitzen des oberen Trums des Kettenförderers (10).

14. Verfahren nach einem der Ansprüche 10 bis 13, umfassend das Steuern des Vorschubs des Kettenförderers (10) abhängig von der Position des Artikels (3), der Position einer Maschine zur additiven Fertigung (2) und der Druckkoordinaten.

## Revendications

1. Appareil de support pour soutenir un article fabriqué par fabrication additive, l'appareil (4) comprenant un transporteur à chaîne (10), qui est configuré pour faire avancer ledit article (3) dans une direction prédéterminée et comprend une branche supérieure ; et une pluralité d'éléments allongés (11), dont chacun est articulé directement à deux éléments allongés adjacents (11) de manière à définir deux chaînes d'entraînement (12) aux extrémités opposées des éléments allongés (11) et une fente (16) entre chaque paire d'éléments allongés adjacents (11).

2. Appareil de support selon la revendication 1, dans lequel chaque élément allongé (11) comprend un profil central (13) ayant au moins une aile (14) et un noyau (15), dans lequel les ailes (14) des éléments allongés adjacents (11) le long de la branche supérieure du transporteur à chaîne (10) définissent une surface interrompue par une pluralité de fentes (16) ; et deux maillons de chaîne (17) disposés aux extrémités opposées du profil (13) et faisant partie intégrante du profil (13).

3. Appareil de support selon la revendication 2, dans lequel chaque maillon de chaîne (17) comprend un premier et un second axe de rotation parallèles l'un à l'autre pour articuler directement l'élément allongé respectif (11) aux deux maillons de chaîne (17) des éléments allongés adjacents respectifs (11).

4. Appareil de support selon la revendication 2 ou 3, dans lequel lesdites chaînes d'entraînement (12) sont du type Galle ou Half-link.

5. Appareil de support selon l'une quelconque des revendications précédentes, dans lequel le transporteur à chaîne (10) comprend deux pignons d'entraînement (19) engagés avec lesdites chaînes d'entraînement (12).

6. Appareil selon la revendication 5, dans lequel le transporteur à chaîne (10) comprend un actionneur (23) relié à un réducteur (24), qui est relié audit pignon d'entraînement (19), en particulier ledit rapport de réduction du réducteur (24) étant supérieur à 100.

7. Appareil selon l'une quelconque des revendications précédentes, dans lequel le transporteur à chaîne (10) comprend deux guides (25) pour guider les deux chaînes d'entraînement (12) respectivement, chaque guide (25) étant disposé au-dessus de la chaîne d'entraînement (12) le long de la branche supérieure de la chaîne d'entraînement (12) pour empêcher le déplacement vers le haut de la chaîne d'entraînement (12).

8. Appareil selon l'une quelconque des revendications précédentes, comprenant au moins un élément chauffant (26) pour chauffer la branche supérieure du transporteur à chaîne (10).

9. Système de fabrication additive pour la fabrication d'articles par un processus de fabrication additive, le système (1) comprenant :
- un appareil de support (4) selon l'une quelconque des revendications précédentes ;
- une machine de fabrication additive (2) comprenant :
- un cylindre de plastification (5) et une buse d'extrusion (6) reliée au cylindre de plastification (5) pour déposer des couches de matériau thermoplastique sur le transporteur à chaîne et fabriquer un article (3) par un processus de fabrication additive ; et
- un robot (7) pour soutenir et commander la position du cylindre de plastification et de la buse d'extrusion dans l'espace situé au-dessus dudit appareil de support (4).

10. Procédé de soutien d'un article fabriqué par fabrication additive, le procédé comprenant :
- la disposition d'un appareil de support (4) selon l'une quelconque des revendications 1 à 8 ; et
- la formation d'une couche de matériau polymère extrudé sur les éléments allongés (11) de la branche supérieure du transporteur à chaîne (10) ; et le fait de permettre à une partie de la couche à un état pâteux de s'insérer dans les fentes (16) entre les éléments allongés adjacents (11) pour former des appendices (27) afin d'ancrer ladite couche au transporteur à chaîne (10).

11. Procédé selon la revendication 10, comprenant :
- le transfert dudit article (3) vers un autre transporteur adjacent audit transporteur à chaîne (10) en faisant avancer ladite branche supérieure dudit transporteur à chaîne (10) et ledit article (3) dans une direction donnée ; et
- le placement dudit article (3) dans une partie incurvée dudit transporteur à chaîne (10) de manière à éloigner la base dudit article (3) des éléments allongés dudit transporteur à chaîne (10).

12. Procédé selon la revendication 11, comprenant l'extraction desdits appendices (27) au niveau de ladite partie incurvée dudit transporteur à chaîne (10).

13. Procédé selon l'une quelconque des revendications 11 à 12, comprenant le chauffage de la branche supérieure du transporteur à chaîne (10).

14. Procédé selon l'une quelconque des revendications 10 à 13, comprenant la commande de l'avancement du transporteur à chaîne (10) en fonction de la position de l'article (3), de la position d'une machine de fabrication additive (2) et des coordonnées d'impression.
